# EUROPEAN PATENT APPLICATION

(11) **EP 3 064 748 A1**
(43) Date of publication of application: **07.09.2016**
(21) Application number: 14872071.7
(22) Date of filing: 18.12.2014
(51) Int. Cl.: F02D 29/06, H02J 7/16

(54) **ENGINE UNIT AND VEHICLE**

(30) Priority: 20.12.2013 JP 2013263304
(71) Applicant: Yamaha Hatsudoki Kabushiki Kaisha, Iwata-shi, Shizuoka 438-8501 (JP)
(72) Inventor: NISHIKAWA, Takahiro, Iwata-shi Shizuoka 438-8501 (JP); HINO, Haruyoshi, Iwata-shi Shizuoka 438-8501 (JP)
(74) Representative: Zimmermann, Tankred Klaus
(86) International application number: PCT/JP2014/083591
(87) International publication number: WO 2015/093574

(57) **Abstract**

The present invention provides, for example, an engine unit that is able to ensure an amount of power generation with a high efficiency even if the rotation speed of a crankshaft is lowered when a vehicle is stopped, without any need to increase the size of a generator. The engine unit includes^{:} a four-stroke engine body; a generator that outputs a voltage lower than a voltage of a battery provided in the vehicle when the crankshaft rotates at a rotation speed equal to an idling speed; an inverter including a plurality of switching parts; and a control device. During at least part of a time period in which the vehicle is stopped and a voltage outputted from the generator is lower than the voltage of the battery, the control device performs a vector control on the plurality of switching parts included in the inverter so as to raise the voltage outputted from the generator that is lower than the voltage of the battery to a voltage higher than the voltage of the battery, to charge the battery.

## Description

### Technical Field

The present invention relates to an engine unit and a vehicle equipped with the engine unit.

### Background Art

The prevalence of mobile devices as typically represented by information communication terminals has created a demand that, for example, a mobile device be connected to a vehicle to draw power from the vehicle for operating or charging the mobile device. If a mobile device is connected to a vehicle, power consumption in the vehicle increases. In addition, daytime lighting is also demanded in a vehicle. Due to these demands, power consumption in a vehicle tends to increase.

While a vehicle is stopped and an engine is stopped, power stored in a battery is consumed. As the power stored in the battery decreases, the need to drive the engine for charging the battery arises, even though the vehicle is stopped.

Driving the engine while the vehicle is stopped does not contribute to travelling of the vehicle. It is therefore desirable that a crankshaft of the engine rotates at a lowered rotation speed while the vehicle is stopped, from the viewpoint of less noise and less fuel consumption.

Patent Literature 1 (PTL1) discloses an engine including a power generation control device. The power generation control device of the engine disclosed in Patent Literature 1 includes a three-phase hybrid bridge circuit for varying a current supplied from a power generating element that is mounted to the engine. In the power generation control device of Patent Literature 1, the three-phase hybrid bridge circuit functions as a rectifier regulator.

In Patent Literature 1, the rotation speed when the vehicle is idling, that is, when the vehicle is stopped, is set to be low, in order to improve fuel consumption. The rectifier regulator is controlled to control power generation when the vehicle is stopped.

### Citation List

### Patent Literature

PTL1: Japanese Patent Application Laid-Open No. 2009-261084

### Summary of Invention

### Technical Problem

In the engine unit disclosed in Patent Literature 1, to ensure a charging voltage obtained from the power generating element while lowering the rotation speed of the crankshaft, for example, increasing the amount of magnets of the power generating element or increasing the thickness of a wire rod of the winding is required. This involves an increase in the size of the power generating element, which deteriorates mountability to the vehicle. Moreover, overall power generation efficiency deteriorates because an excessive power generation voltage which can be produced due to a high rotation speed needs to be adjusted.

An object of the present invention is to provide: an engine unit that is able to ensure an amount of power generation with a high efficiency even if the rotation speed of a crankshaft is lowered when a vehicle is stopped, without any need to increase the size of a generator; and a vehicle equipped with the engine unit.

### Solution to Problem

To solve the problems described above, the present invention adopts the following configurations.
(1) An engine unit mounted to a vehicle provided with a battery, the engine unit including:
   an engine body including a crankshaft;
   a generator that generates power by being rotated along with the rotation of the crankshaft;
   an inverter including a plurality of switching parts by which a current supplied from the generator to the battery is controlled; and
   a control device including a power generation controller and a combustion controller, the power generation controller controlling the plurality of switching parts included in the inverter to control a current supplied from the generator to the battery, the combustion controller controlling a combustion operation of the engine body,
   the control device being configured to, during at least part of a time period in which the vehicle is stopped and a voltage outputted from the generator is lower than a voltage of the battery, perform a vector control on the plurality of switching parts included in the inverter so as to raise the voltage outputted from the generator that is lower than the voltage of the battery to a voltage higher than the voltage of the battery, to charge the battery.

   In the engine unit of (1), the combustion controller of the control device controls the combustion operation of the engine body. The generator generates power by being rotated along with the rotation of the crankshaft of the engine body. During at least part of the time period in which the vehicle is stopped and the voltage outputted from the generator is lower than the voltage of the battery, the control device performs the vector control on the plurality of switching parts included in the inverter such that the voltage outputted from the generator, which is lower than the voltage of the battery, is raised to a voltage higher than the voltage of the battery, to charge the battery.
   Switching on/off the switching parts under the vector control enables the voltage outputted from the generator, which is lower than the voltage of the battery, to be raised to a voltage higher than the voltage of the battery. In addition, the vector control enables the current and voltage of the generator to be controlled so as to obtain an enhanced power factor. Therefore, even if a voltage lower than the voltage of the battery is outputted from the generator, the battery can be charged with a high efficiency.
   Accordingly, the engine unit of (1) is able to charge the battery with a high efficiency even when the vehicle is stopped and the crankshaft rotates at a rotation speed that makes the generator output a voltage lower than the voltage of the battery. Hence, the engine unit of (1) is able to ensure an amount of power generation with a high efficiency even if the rotation speed of the crankshaft when the vehicle is stopped is lowered, without any need to increase the size of the generator.
   One example of the engine unit having a time period in which the vehicle is stopped and the output voltage of the generator is lower than the voltage of the battery is as follows. That is, the engine unit of (1) may be an engine unit having such a setting that a generator outputs a voltage lower than a voltage of a battery when a vehicle is stopped. The engine unit of (1) is able to ensure an amount of power generation with a high power generation efficiency when the vehicle is stopped, even if the rotation speed of the crankshaft when the vehicle is stopped is low. In this case as well, there is no need to increase the size of the generator. The engine unit of (1) may include a generator dimensioned (sized) such that a voltage outputted from the generator under a state where the vehicle is stopped is lower than the voltage of the battery. The engine unit of (1) having such a configuration is able to ensure an amount of power generation with a high power generation efficiency when the vehicle is stopped, without any need to increase the size of the generator. In this configuration as well, there is no need to increase the rotation speed when the vehicle is stopped. In addition, the configuration of (1) allows the rotation speed when the vehicle is stopped to be set low, while ensuring an amount of power generation with a high power generation efficiency when the vehicle is stopped, without any need to increase the size of the generator.
   Non-limiting examples of "at least part of a time period in which the vehicle is stopped and a voltage outputted from the generator is lower than a voltage of the battery" include the following situations. The "at least part of a time period in which the vehicle is stopped and a voltage outputted from the generator is lower than a voltage of the battery" may be a time period during non-warming-up of a vehicle configured such that the rotation speed of a crankshaft is different during warming-up and during non-warming-up when the vehicle is stopped. The "at least part of a time period in which the vehicle is stopped and a voltage outputted from the generator is lower than a voltage of the battery" may be a time period in which the vehicle is stopped and a remaining battery capacity is not more than a predetermined amount. The "at least part of a time period in which the vehicle is stopped and a voltage outputted from the generator is lower than a voltage of the battery" may be the entire time period in which the vehicle is stopped and the voltage outputted from the generator is lower than the voltage of the battery.
   While the vehicle is travelling, the vehicle repeats travelling and stopping, and therefore a time period in which the vehicle is stopped occurs a plurality of times. It is, however, not always necessary that the control device performs the above-described control of (1) during each of the plurality of time periods in which the vehicle is stopped. It suffices that the control device performs the above-described control of (1) during at least part of the total time period in which the vehicle is stopped in a travelling mode. Thus, the "at least part of a time period in which the vehicle is stopped and a voltage outputted from the generator is lower than a voltage of the battery" means at least part of the total time period in which the vehicle is stopped in the travelling mode. It may be also acceptable that the control device performs the above-described control of (1) during a time period other than the "at least part of a time period in which the vehicle is stopped and a voltage outputted from the generator is lower than a voltage of the battery".
(2) The engine unit according to (1), wherein
   during at least part of a time period in which the voltage outputted from the generator is higher than the voltage of the battery, the control device charges the battery by performing a phase control for advancing or delaying the timing to cause conduction of the plurality of switching parts included in the inverter.
   If the crankshaft rotates at a rotation speed higher than its rotation speed obtained when the vehicle is stopped, the voltage outputted from the generator increases. The voltage outputted from the generator becomes higher than the voltage of the battery. The configuration of (2), in which the phase control is performed for advancing or delaying the timing to cause conduction of the plurality of switching parts, is able to ensure an amount of power generation with a high efficiency, even if the crankshaft rotates at a rotation speed higher than its rotation speed when the vehicle is stopped so that the generator outputs a voltage higher than the voltage of the battery.
   Non-limiting examples of "at least part of a time period in which the voltage outputted from the generator is higher than the voltage of the battery" include the following situations. The "at least part of a time period in which the voltage outputted from the generator is higher than the voltage of the battery" may be, for example, a time period in which the rotation speed of the crankshaft or the travelling speed of the vehicle exceeds a predefined value under a state where the engine is operating. In such a case, the control device performs the above-described control of (2) during the time period in which the rotation speed of the crankshaft or the travelling speed of the vehicle exceeds the predefined value. If this is the case, the control device may perform the above-described control of (1) during a time period in which the rotation speed of the crankshaft or the travelling speed of the vehicle is equal to or less than the predefined value.
   While the vehicle is travelling, the vehicle repeats travelling and stopping, and therefore a state where the vehicle is not stopped occurs a plurality of times. That is, a state where the crankshaft rotates at a rotation speed higher than its rotation speed obtained when the vehicle is stopped occurs a plurality of times. It is, however, not always necessary that the control device performs the above-described control of (2) in each of the plurality of states where the vehicle is not stopped. It suffices that the control device performs the above-described control of (2) during at least part of the total time period in which the vehicle is not stopped in a travelling mode. Thus, the "at least part of a time period in which the voltage outputted from the generator is higher than the voltage of the battery" means at least part of the total time period in which the vehicle is not stopped in the travelling mode. It may be also acceptable that the control device performs the above-described control of (2) during a time period other than the "at least part of a time period in which the voltage outputted from the generator is higher than the voltage of the battery".
(3) The engine unit according to (1) or (2), wherein
   the generator functions as a motor that drives the crankshaft with power supplied from the battery,
   under a state where rotation of the crankshaft is stopped, the control device starts the engine body by controlling the plurality of switching parts included in the inverter so as to supply power from the battery to the generator.
   In the configuration of (3), the generator functioning as a motor drives the crankshaft with power supplied from the battery, to start the engine body.
   As an approach for ensuring a power generation voltage from the generator at a low rotation speed with avoidance of any size increase of the generator, for example, it is conceivable to adopt a thin wire rod for windings and increase the number of turns thereof. Adoption of a thin wire rod with an increased number of turns for the windings, however, results in a decreased drive torque being exerted when the generator functions as a motor to rotate the crankshaft with power supplied from the battery.
   The engine unit of (3) is able to charge the battery with a high efficiency even if the rotation speed of the crankshaft is lowered such that the output voltage of the generator falls below the voltage of the battery when the vehicle is stopped. Accordingly, in a case of driving the crankshaft with the power supplied from the battery, a decrease in the drive torque is prevented, while in a case of power generation, an amount of power generation can be ensured with a high efficiency even if the rotation speed of the crankshaft when the vehicle is stopped is lowered.
(4) The engine unit according to (3), wherein
   for a predefined time period after starting the engine body, the control device directs the generator to accelerate rotation of the crankshaft by controlling the plurality of switching parts included in the inverter so as to supply power from the battery to the generator.
   In the configuration of (4), after the engine body is started, the generator functioning as a motor accelerates forward rotation of the crankshaft. Accordingly, the forward rotation of the crankshaft rotated by combustion of the engine body can be stabilized. Moreover, in accelerating the vehicle, the forward rotation of the crankshaft rotated by combustion of the engine body can be accelerated more quickly.
(5) The engine unit according to (4), wherein
   a control mode of the control device transitions between a control mode of charging the battery by performing the vector control on the plurality of switching parts included in the inverter so as to raise the voltage outputted from the generator that is lower than the voltage of the battery to a voltage higher than the voltage of the battery, and a control mode of accelerating the rotation of the crankshaft by performing the vector control on the plurality of switching parts included in the inverter so as to provide for a control which causes power to be supplied from the battery to the generator.
   The transition of the control mode between the control mode of charging the battery based on the vector control and the control mode of accelerating rotation of the crankshaft based on the vector control does not involve any change in the control type, and can be promptly implemented by, for example, changing a parameter such as a command value. In the configuration of (5), therefore, the transition between the state where the battery is charged and the state where rotation of the crankshaft is accelerated, in other words, between a power generation state and a motoring state, can be implemented immediately.
   The transition of the control mode includes a transition from the control mode of charging the battery by performing the vector control on the plurality of switching parts included in the inverter so as to raise the voltage outputted from the generator that is lower than the voltage of the battery to a voltage higher than the voltage of the battery, to the control mode of accelerating the rotation of the crankshaft by performing the vector control on the plurality of switching parts included in the inverter so as to provide for a control which causes power to be supplied from the battery to the generator. The transition of the control mode also includes the opposite, that is, a transition from the control mode of accelerating the rotation of the crankshaft by performing the vector control on the plurality of switching parts included in the inverter so as to provide for a control which causes power to be supplied from the battery to the generator, to the control mode of charging the battery by performing the vector control on the plurality of switching parts included in the inverter so as to raise the voltage outputted from the generator that is lower than the voltage of the battery to a voltage higher than the voltage of the battery.
(6) The engine unit according to any one of (1) to (5), wherein
   the engine body is a four-stroke engine in which a high-load region and a low-load region occur during four strokes, the high-load region having a high load on rotation of the crankshaft, the low-load region having a load on rotation of the crankshaft lower than that of the high-load region.
   In the four-stroke engine having a high-load region and a low-load region, as compared with other types of engines, there is a larger variation in the rotation speed depending on regions. If the rotation speed largely varies depending on regions, the stability of the rotation tends to deteriorate when the rotation speed of the crankshaft is lowered. The engine unit of (4) is able to charge the battery even if, when the vehicle is stopped, the rotation speed of the crankshaft is low so that a voltage lower than the voltage of the battery is outputted from the generator. Power that the generator generates in charging the battery, which corresponds a load put on the engine body, is high in a region where the rotation speed is relatively high, and low in a region where the rotation speed is relatively low. That is, the load varies in such a manner as to stabilize the rotation speed. Accordingly, even if, when the vehicle is stopped, the rotation speed of the crankshaft is low so that a voltage lower than the voltage of the battery is outputted from the generator, an amount of power generation can be ensured with a high efficiency while the rotation speed of the crankshaft is stabilized.
(7) The engine unit according to any one of (1) to (6), wherein
   the engine body includes a plurality of cylinders.
   An engine including a plurality of multi-cylinders causes less load variation, and thus provides a high stability of rotation. It is therefore possible that the rotation speed of the crankshaft when the vehicle is stopped is further lowered. Even if the rotation speed of the crankshaft when the vehicle is stopped is further lowered, an amount of power generation can be ensured with high power generation efficiency.
(8) A vehicle including the engine unit according to any one of (1) to (7).
   The vehicle of (8) is able to ensure an amount of power generation with a high efficiency even if the rotation speed is the rotation speed when the vehicle is stopped, without any need to increase the size of the generator.

### Advantageous Effects of Invention

The present invention can provide: an engine unit that is able to ensure an amount of power generation with a high efficiency even if the rotation speed of a crankshaft is lowered when a vehicle is stopped, without any need to increase the size of a generator; and a vehicle equipped with the engine unit.

### Brief Description of Drawings

[Fig. 1] Fig. 1 is a cross-sectional view schematically showing an outline configuration of part of an engine unit according to an embodiment of the present invention.
[Fig. 2] Fig. 2 is an illustrative diagram schematically showing the relationship between a crank angle position and a required torque at a time of engine start.
[Fig. 3] Fig. 3 is a cross-sectional view showing, on an enlarged scale, a generator shown in Fig. 1 and the surrounding area.
[Fig. 4] Fig. 4 is a cross-sectional view showing a cross-section of the generator shown in Fig. 3, as taken along a plane perpendicular to its rotation axis J.
[Fig. 5] Fig. 5 is a block diagram showing a basic electrical configuration of the engine unit shown in Fig. 1.
[Fig. 6] Fig. 6 is a state transition diagram showing, in outline, states of the engine unit of Fig. 5.
[Fig. 7] Fig. 7 shows exemplary current and voltage waveforms in a vector control.
[Fig. 8] Fig. 8 shows exemplary current and voltage waveforms in a phase control.
[Fig. 9] Fig. 9(a) is a graph schematically showing the relationship between the rotation speed of a crankshaft and a power generation current according to an embodiment; and Fig. 9(b) is a graph schematically showing the relationship between the rotation speed of the crankshaft and power generation efficiency.
[Fig. 10] Fig. 10 is a diagram showing an external appearance of a vehicle to which the engine unit is mounted.

### Description of Embodiments

In the following, the present invention will be described based on preferred embodiments with reference to the drawings.

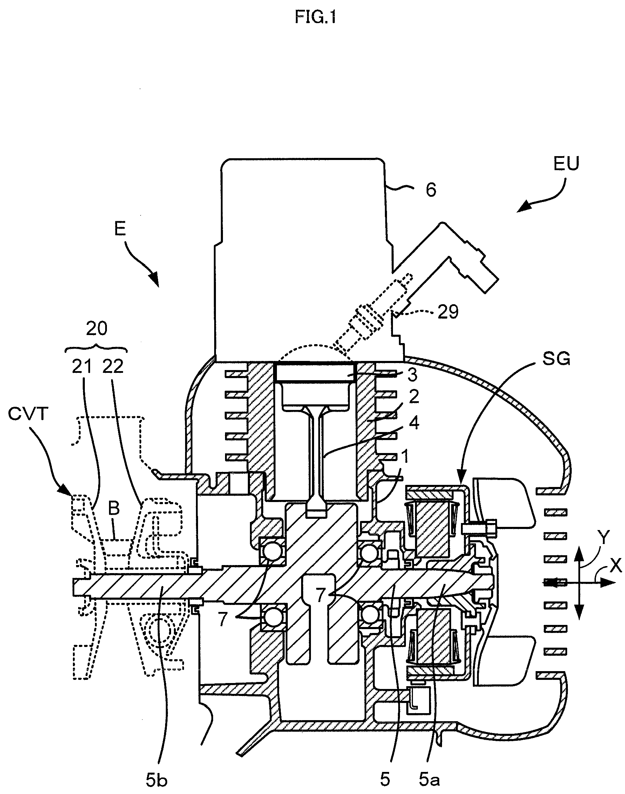

Fig. 1 is a cross-sectional view schematically showing an outline configuration of part of an engine unit EU according to an embodiment of the present invention.

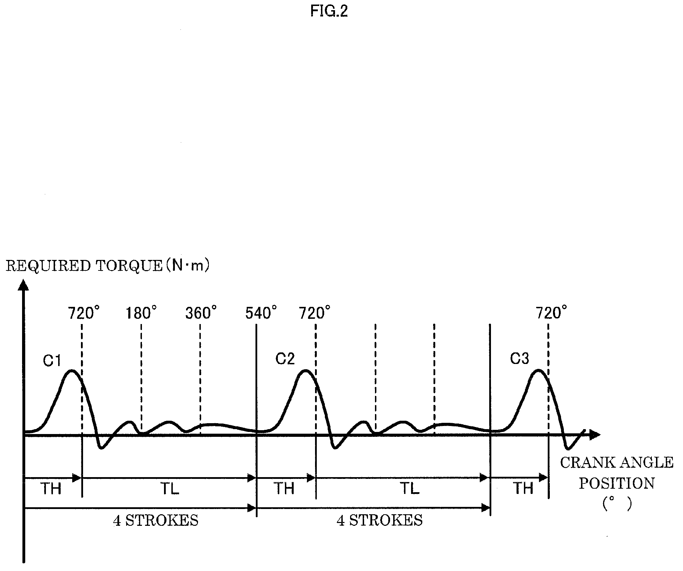

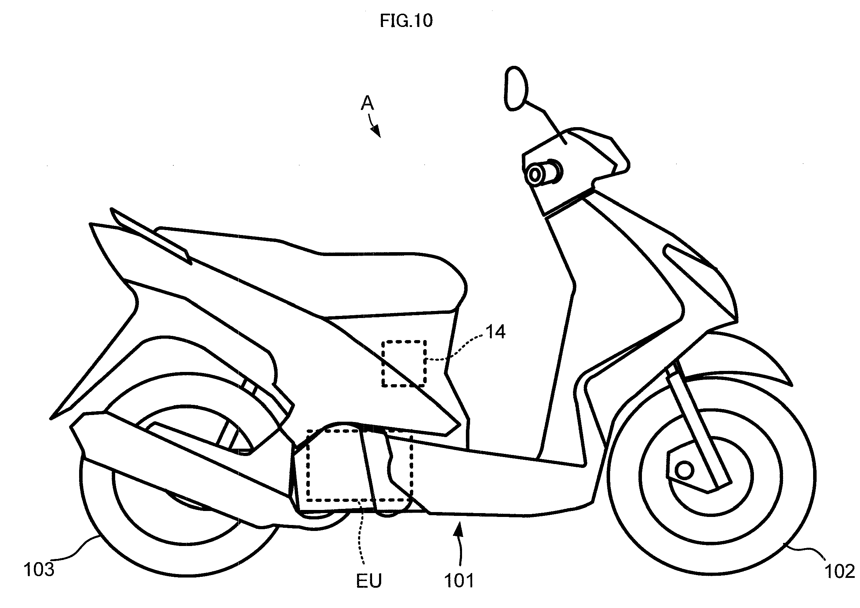

The engine unit EU is installed in a motorcycle (see Fig. 10), which is an example of a vehicle. The engine unit EU includes a four-stroke engine body E and a generator SG. The four-stroke engine body E is a four-stroke engine having a single cylinder. In the four-stroke engine body E, the relationship shown in Fig. 2 is established between a crank angle position and a required torque.

Fig. 2 is an illustrative diagram schematically showing the relationship between a crank angle position and a required torque at a time of engine start.

The four-stroke engine body E includes, during four strokes, a high-load region TH in which a high load is put on rotation of a crankshaft 5 and a low-load region TL in which a load put on rotation of the crankshaft 5 is lower than that of the high-load region TH. From the viewpoint of the rotation angle of the crankshaft 5, the low-load region TL is equal to or wider than the high-load region TH. To be specific, the low-load region TL is wider than the high-load region TH. In other words, a rotation angle region corresponding to the low-load region TL is wider than a rotation angle region corresponding to the high-load region TH. In more detail, during rotation, the four-stroke engine body E repeats four strokes, namely, an intake stroke, a compression stroke, an expansion stroke, and an exhaust stroke. As shown in Fig. 2, the compression stroke is included in the high-load region TH, and not included in the low-load region TL. In the four-stroke engine body E of this embodiment, the high-load region TH is a region that substantially overlaps the compression stroke, and the low-load region TL is a region that substantially overlaps the intake stroke, the expansion stroke, and the exhaust stroke. It is not necessary that the boundary of the high-load region TH and the boundary of the low-load region TL are coincident with the boundaries of the corresponding strokes.

As shown in Fig. 1, the engine unit EU includes the generator SG. The generator SG is a three-phase brushless generator. At a time of engine start, the generator SG functions as a starter motor that drives the crankshaft 5 in rotation to start the four-stroke engine body E. The generator SG is a starter-generator. Hereinafter, the starter-generator will be referred to simply as the generator SG.

During at least part of a time period after the start of the four-stroke engine body E, the generator SG functions as a generator by being driven in rotation by the crankshaft 5. That is, it is not indispensable that the generator SG functions as a generator all the time after combustion of the engine is started. In an acceptable example, the generator SG does not function as a generator immediately after combustion of the engine is started, the generator SG functions as a generator upon satisfaction of a predetermined condition. Examples of a predetermined condition include a condition that the rotation speed of the crankshaft 5 reaches a predetermined speed or a condition that a predetermined time period elapses after combustion of the engine is started. It may be acceptable that a period in which the generator SG functions as a generator and a period in which the generator SG functions as a motor (for example, as a vehicle-driving motor) are present after combustion of the engine is started.

The generator SG is attached to the crankshaft 5 of the four-stroke engine body E. In this embodiment, the generator SG is attached to the crankshaft 5 without interposition of a power transmission mechanism (such as a belt, a chain, a gear, a speed reducer, or a speed increaser). In the present invention, however, it suffices that the generator SG is configured such that rotation of the generator SG causes rotation of the crankshaft 5. Therefore, the generator SG may be attached to the crankshaft 5 with interposition of a power transmission mechanism. In the present invention, it is preferable that the rotation axis of the generator SG is substantially coincident with the rotation axis of the crankshaft 5. It is also preferable that the generator SG is attached to the crankshaft 5 without interposition of a power transmission mechanism, as illustrated in this embodiment.

The four-stroke engine body E includes a crank case 1 (engine case 1), a cylinder 2, a piston 3, a connecting rod 4, and a crankshaft 5. The cylinder 2 is arranged to protrude from the crank case 1 in a predetermined direction (for example, obliquely upward). The piston 3 is arranged in the cylinder 2 such that the piston 3 is freely movable back and forth. The crankshaft 5 is rotatably arranged in the crank case 1. One end portion (for example, an upper end portion) of the connecting rod 4 is coupled to the piston 3. The other end portion (for example, a lower end portion) of the connecting rod 4 is coupled to the crankshaft 5. A cylinder head 6 is attached to an end portion (for example, an upper end portion) of the cylinder 2. The crankshaft 5 is supported on the crank case 1 via a pair of bearings 7 in a freely rotatable manner. One end portion 5a (for example, a right end portion) of the crankshaft 5 protrudes out of the crank case 1. The generator SG is attached to the one end portion 5a of the crankshaft 5.

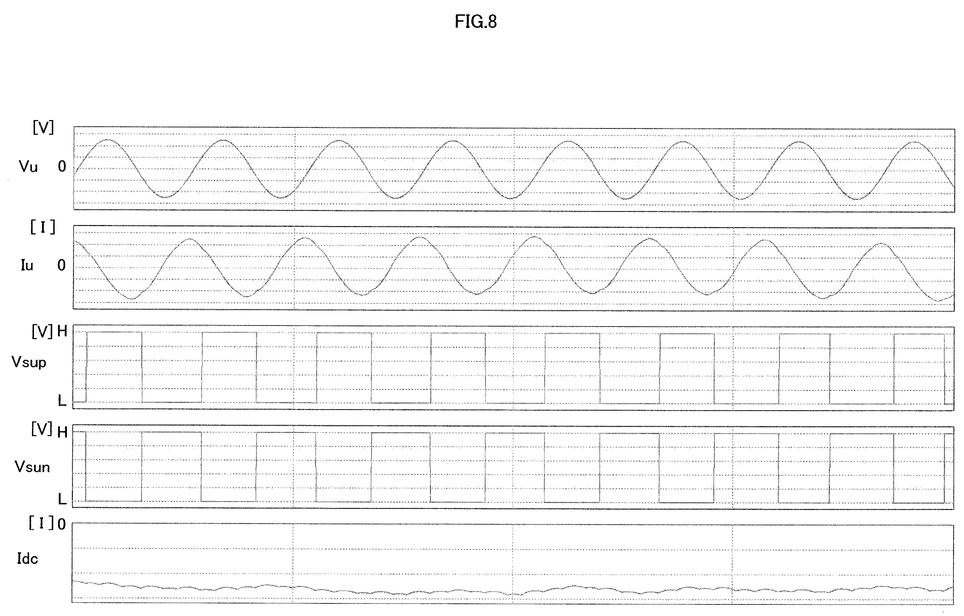

The other end portion 5b (for example, a left end portion) of the crankshaft 5 protrudes out of the crank case 1. A primary pulley 20 of a continuously variable transmission CVT is attached to the other end portion 5b of the crankshaft 5. The primary pulley 20 includes a fixed sheave 21 and a movable sheave 22. The fixed sheave 21 is fixed to a distal end portion of the other end portion 5b of the crankshaft 5 in such a manner that the fixed sheave 21 rotates together with the crankshaft 5. The movable sheave 22 is splined to the other end portion 5b of the crankshaft 5. Thus, the movable sheave 22 is movable in an axial direction X, and rotatable together with the crankshaft 5 with the interval between the movable sheave 22 and the fixed sheave 21 varying. A belt B is wrapped on the primary pulley 20 and a secondary pulley (not shown). A rotation force of the crankshaft 5 is transmitted to a drive wheel of a motorcycle (see Fig. 8).

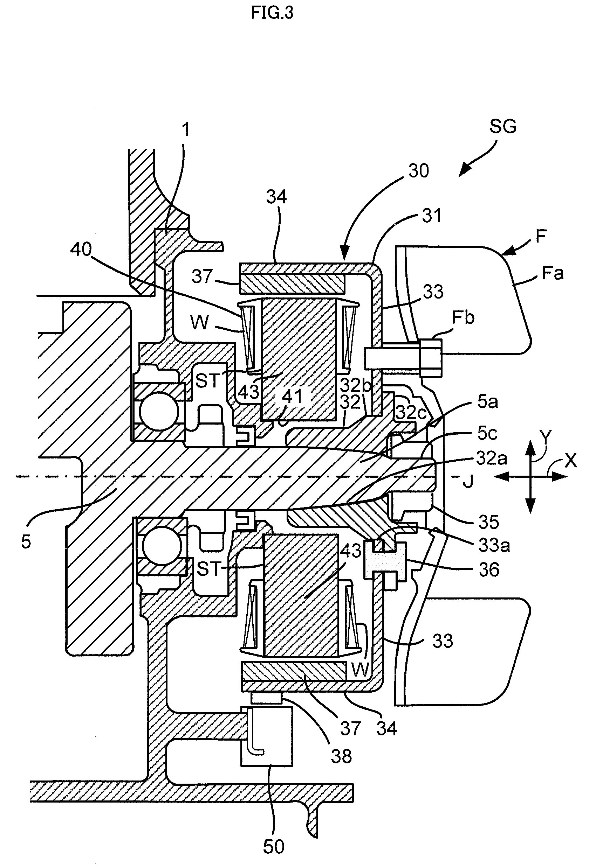

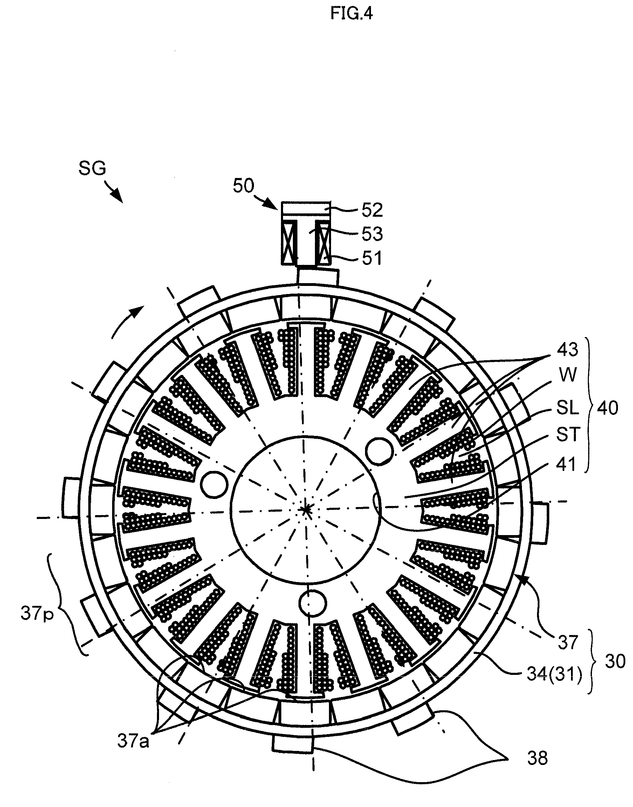

Fig. 3 is a cross-sectional view showing, on an enlarged scale, the generator SG shown in Fig. 1 and the surrounding area. Fig. 4 is a cross-sectional view showing a cross-section of the generator SG of Fig. 3, as taken along a plane perpendicular to its rotation axis J.

The generator SG includes an outer rotor 30 and an inner stator 40. The outer rotor 30 includes an outer rotor main body part 31. The outer rotor main body part 31 is made of, for example, a ferromagnetic material. The outer rotor main body part 31 is in the shape of a cylinder with a bottom. The outer rotor main body part 31 includes a cylindrical boss portion 32, a disk-shaped bottom wall portion 33, and a back yoke portion 34 having a cylindrical shape. The cylindrical boss portion 32 is fixed to the crankshaft 5 under a state where the one end portion 5a of the crankshaft 5 is received in the cylindrical boss portion 32. The bottom wall portion 33, which is fixed to the cylindrical boss portion 32, has a disk-like shape that extends in a radial direction Y of the crankshaft 5. The back yoke portion 34 has a cylindrical shape that extends from an outer circumferential edge of the bottom wall portion 33 in the axial direction X of the crankshaft 5. The back yoke portion 34 extends toward the crank case 1.

The bottom wall portion 33 and the back yoke portion 34 are integrally formed of, for example, a metal plate being stamped. In the present invention, however, it is acceptable that the bottom wall portion 33 and the back yoke portion 34 are formed as separate parts. More specifically, in the outer rotor main body part 31, the back yoke portion 34 may be formed integrally with another part of the outer rotor main body part 31, or may be formed as a part separate from another part of the outer rotor main body part 31. In a case where the back yoke portion 34 and another part are formed as separate parts, an essential feature is that the back yoke portion 34 is made of a ferromagnetic material, and another part may be made of a material different from the ferromagnetic material.

The cylindrical boss portion 32 has a tapered reception hole 32a for receiving the one end portion 5a of the crankshaft 5. The tapered reception hole 32a extends in the axial direction X of the crankshaft 5. The tapered reception hole 32a has a taper angle that corresponds to an outer circumferential surface of the one end portion 5a of the crankshaft 5. When the one end portion 5a of the crankshaft 5 enters the reception hole 32a, the outer circumferential surface of the one end portion 5a comes into contact with an inner circumferential surface of the reception hole 32a, and the crankshaft. 5 is fixed to the reception hole 32a. As a result, the position of the boss portion 32 is settled with respect to the axial direction X of the crankshaft 5. In this condition, a nut 35 is screwed onto a male thread portion 5c formed in a distal end portion of the one end portion 5a of the crankshaft 5. In this manner, the cylindrical boss portion 32 is fixed to the crankshaft 5.

The cylindrical boss portion 32 has a large-diameter portion 32b that is provided in a proximal end portion (in Fig. 3, at the right side) of the cylindrical boss portion 32. The cylindrical boss portion 32 has a flange portion 32c that is formed on an outer circumferential surface of the large-diameter portion 32b. The flange portion 32c extends radially outward. The large-diameter portion 32b of the cylindrical boss portion 32 is received in a hole 33a that is formed in a central region of the bottom wall portion 33 of the outer rotor main body part 31. In this condition, the flange portion 32c is in contact with an outer peripheral surface (a right-hand surface in Fig. 3) of the bottom wall portion 33. The flange portion 32c of the cylindrical boss portion 32 and the bottom wall portion 33 of the outer rotor main body part 31 are fixed together by rivets 36 at a plurality of locations with respect to a circumferential direction of the outer rotor main body part 31. The rivets 36 penetrate through the flange portion 32c and the bottom wall portion 33.

The generator SG is a permanent-magnet generator. The back yoke portion 34 of the outer rotor main body part 31 has a plurality of permanent magnet parts 37 that are provided on an inner circumferential surface of the back yoke portion 34. Each of the permanent magnet parts 37 is provided such that the S pole and N pole are arranged side by side with respect to a radial direction of the generator SG.

The plurality of permanent magnet parts 37 are arranged in such a manner that the N pole and S pole alternately appear with respect to a circumferential direction of the generator SG. In this embodiment, the number of magnetic poles of the outer rotor 30 opposed to the inner stator 40 is twenty-four. The number of magnetic poles of the outer rotor 30 means the number of magnetic poles opposed to the inner stator 40. The number of magnetic pole faces of the permanent magnet parts 37 that are opposed to the teeth 43 of a stator core ST is equivalent to the number of magnetic poles of the outer rotor 30. A magnetic pole face included in each magnetic pole of the outer rotor 30 corresponds to a magnetic pole face of the permanent magnet part 37 that is opposed to the inner stator 40. The magnetic pole face of the permanent magnet part 37 is covered with a non-magnetic material (not shown) that is arranged between the permanent magnet part 37 and the inner stator 40. No magnetic material is arranged between the permanent magnet part 37 and the inner stator 40. No particular limitation is put on the non-magnetic material, and examples thereof include a stainless steel material. In this embodiment, the permanent magnet part 37 is a ferrite magnet. In the present invention, conventionally known magnets including a neodymium bonded magnet, a samarium-cobalt magnet, a neodymium magnet, and the like, are adoptable for the permanent magnet part. The shape of the permanent magnet part 37 is not particularly limited. It may be acceptable that the outer rotor 30 is of interior permanent magnet type (IPM type) having the permanent magnet parts 37 embedded in a magnetic material, but preferably the outer rotor 30 is of surface permanent magnet type (SPM type) having the permanent magnet parts 37 exposed from a magnetic material, as illustrated in this embodiment.

As described above, the outer rotor 30, which is attached to the crankshaft 5 such that it is rotatable together with the crankshaft 5, is a rotating element for increasing the inertia of the crankshaft 5. A cooling fan F including a plurality of blade portions Fa is provided to the outer peripheral surface (at the right side in Figs. 1 and 3) of the bottom wall portion 33 of the outer rotor 30. The cooling fan F is fixed to the outer peripheral surface of the bottom wall portion 33 by means of a fixture (a plurality of bolts Fb).

The inner stator 40 includes a stator core ST and multi-phase stator windings W The stator core ST is obtained by, for example, thin silicon steel plates being stacked in the axial direction. The stator core ST has, in its central region, a hole 41 whose inner diameter is larger than the outer diameter of the cylindrical boss portion 32 of the outer rotor 30. The stator core ST includes a plurality of teeth 43 that integrally extend radially outward (see Fig. 4). In this embodiment, eighteen teeth 43 in total are arranged at intervals with respect to the circumferential direction. In other words, the stator core ST has eighteen slots SL in total that are arranged at intervals with respect to the circumferential direction (see Fig. 4). The teeth 43 are arranged at equal intervals with respect to the circumferential direction.

The generator SG is a three-phase generator. The stator winding W is wound on each of the teeth 43. The multi-phase stator windings W are arranged through the slots SL. Each of the multi-phase stator windings W belongs to any of a U-phase, V-phase, and W-phase. The stator windings W are arranged in the order of U-phase, V-phase, and W-phase, for example.

As shown in Fig. 3, the inner stator 40 has the hole 41 formed in a central region of the inner stator 40 with respect to the radial direction of the generator SG. The crankshaft 5 and the cylindrical boss portion 32 of the outer rotor 30 are arranged in the hole 41 with a gap ensured between them and a wall surface (of the inner stator 40) defining the hole 41. The inner stator 40 under this condition is attached to the crank case 1 of the four-stroke engine body E. The teeth 43 of the inner stator 40 are arranged such that end portions (distal surfaces) of the teeth 43 are at an interval from the magnetic pole faces (inner circumferential surfaces) of the permanent magnet parts 37 of the outer rotor 30. In this state, the outer rotor 30 is rotated along with the rotation of the crankshaft 5. The outer rotor 30 rotates integrally with the crankshaft 5. That is, the speed of rotation of the outer rotor 30 is equal to the speed of rotation of the crankshaft 5.

A further description of the outer rotor 30 will be given with reference to Fig. 4. The permanent magnet parts 37 are provided outside the inner stator 40 with respect to the radial direction of the generator SG. The back yoke portion 34 is provided outside the permanent magnet parts 37 with respect to the radial direction. The permanent magnet parts 37 include, in their surfaces opposed to the inner stator 40, a plurality of magnetic pole faces 37a. The magnetic pole faces 37a are arranged in the circumferential direction of the generator SG. Each of the magnetic pole faces 37a has a N pole or S pole. The N pole and S pole are arranged alternately with respect to the circumferential direction of the generator SG. The magnetic pole faces 37a of the permanent magnet parts 37 face the inner stator 40. In this embodiment, a plurality of magnets are arranged in the circumferential direction of the generator SG, and each of the plurality of magnets is arranged with its S pole and N pole arranged side by side in the radial direction of the generator SG. A single S pole and a single N pole adjacent to each other with respect to the circumferential direction constitute a magnetic pole face pair 37p. The number of the magnetic pole face pairs 37p is one-half of the number of the magnetic pole faces 37a. In this embodiment, the outer rotor 30 is provided with twenty-four magnetic pole faces 37a that are opposed to the inner stator 40, and the number of the magnetic pole face pairs 37p included in the outer rotor 30 is twelve. Twelve magnetic pole face pairs 37p corresponding to twelve magnet pairs are shown in Fig. 4. For clarity of the drawing, the reference sign 37p is given to only one of the pairs. The number of the magnetic pole faces 37a included in the generator SG is more than 2/3 of the number of teeth 43. The number of the magnetic pole faces 37a included in the generator SG is equal or more than 4/3 of the number of teeth 43.

The outer rotor 30 includes, on its outer surface, a plurality of detection object parts 38 for detection of the rotation position of the outer rotor 30. Magnetic effects are used to detect the plurality of detection object parts 38. The plurality of detection object parts 38 arranged at intervals with respect to the circumferential direction are provided on the outer surface of the outer rotor 30. In this embodiment, the plurality of detection object parts 38 arranged at intervals with respect to the circumferential direction are provided on an outer circumferential surface of the outer rotor 30. The plurality of detection object parts 38 are arranged on an outer circumferential surface of the back yoke portion 34 having a cylindrical shape. Each of the plurality of detection object parts 38 protrudes from the outer circumferential surface of the back yoke portion 34 toward the outside with respect to the radial direction Y of the generator SG. The bottom wall portion 33, the back yoke portion 34, and the detection object parts 38 are integrally formed of, for example, a metal plate such as an iron plate being stamped. That is, the detection object parts 38 are made of a ferromagnetic material. Details of the arrangement of the detection object parts 38 will be described later.

A rotor position detection device 50 is a device that detects the position of the outer rotor 30. The rotor position detection device 50 also functions as a speed detection unit that detects the rotation speed of the crankshaft 5. The rotor position detection device 50 is provided at a position opposed to the plurality of detection object parts 38. To be more specific, the rotor position detection device 50 is arranged at a position so that the plurality of detection object parts 38 to come into opposition to the rotor position detection device 50 one after another. The rotor position detection device 50 is opposed to a path through which the detection object parts 38 move along with the rotation of the outer rotor 30. The rotor position detection device 50 is arranged at a position distant from the inner stator 40. In this embodiment, the rotor position detection device 50 is arranged such that the back yoke portion 34 and the permanent magnet parts 37 of the outer rotor 30 are located between the rotor position detection device 50 and the inner stator 40 having the stator windings W with respect to the radial direction of the crankshaft 5. The rotor position detection device 50 is arranged outside the outer rotor 30 with respect to the radial direction of the generator SG. The rotor position detection device 50 faces the outer circumferential surface of the outer rotor 30.

The rotor position detection device 50 includes a detection-purpose winding 51, a detection-purpose magnet 52, and a core 53. The detection-purpose winding 51 functions as a pick-up coil for detecting the detection object parts 38. The core 53 is a rod-like member made of, for example, iron. The detection-purpose winding 51 magnetically detects the detection object parts 38. Upon start of rotation of the crankshaft 5, the rotor position detection device 50 starts detection of the rotation position of the outer rotor 30. Instead of the above-described configuration in which a voltage produced by an electromotive force varies along with passing of the detection object parts 38, other configurations are also adoptable for the rotor position detection device 50. Examples of such other configurations adoptable for the rotor position detection device 50 include a configuration in which the detection-purpose winding 51 is constantly rendered conductive and a conducting current varies depending on a variation in inductance produced along with passing of the detection object parts 38. No particular limitation is put on the rotor position detection device 50, and it may include a Hall element or an MR element. The engine unit EU of this embodiment (see Fig. 1) may include a Hall element or an MR element.

Referring to Fig. 4, a description will be given of the arrangement of the detection object parts 38 of the outer rotor 30. In this embodiment, the plurality of detection object parts 38 are provided on the outer surface of the outer rotor 30. The plurality of detection object parts 38 have the same positional relationship relative to the corresponding magnetic pole face pairs 37p. The rotor position detection device 50 is provided at a position opposed to the plurality of detection object parts 38. The rotor position detection device 50 is provided at a position opposed to each of the plurality of detection object parts 38 during rotation of the outer rotor 30. The number of the detection object parts 38 to which the rotor position detection device 50 is simultaneously (at one time) opposed is one, and not more than one. In Fig. 4, the dashed and dotted lines indicate specified positions with respect to the circumferential direction, which are defined in advance. Each of the specified positions is a position in the magnetic pole pair 37p including two magnetic poles (S pole and N pole) adjacent to each other with respect to the circumferential direction. In this embodiment, the outer rotor 30 is provided with eleven detection object parts 38, the number of which is one less than the number of the specified positions. The eleven detection object parts 38 are arranged at eleven of the twelve specified positions, respectively. The plurality of detection object parts 38 may be, for example, formed as parts separate from the back yoke portion 34. The plurality of detection object parts 38 may be, for example, formed as a single part including a plurality of sections that are magnetized alternately with opposite poles with respect to the circumferential direction.

### [Electrical Configuration]

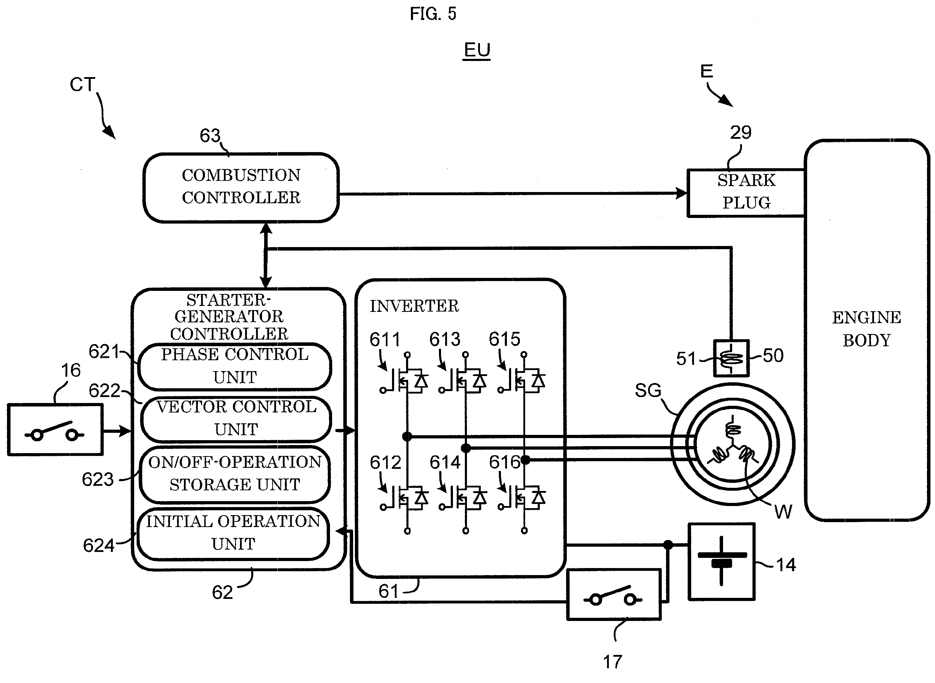

Fig. 5 is a block diagram showing a basic electrical configuration of the engine unit EU shown in Fig. 1.

The engine unit EU includes the four-stroke engine body E, the generator SG, and a control device CT. The generator SG, a spark plug 29, and a battery 14 are connected to the control device CT.

The control device CT is connected to the multi-phase stator windings W, and supplies a current from the battery 14 provided in a vehicle to the multi-phase stator windings W.

The control device CT includes a starter-generator controller 62, a combustion controller 63, and a plurality of switching parts 611 to 616. In this embodiment, the control device CT includes six switching parts 611 to 616. The switching parts 611 to 616 constitute a three-phase bridge inverter. The plurality of switching parts 611 to 616 are connected to the respective phases of the multi-phase stator windings W. The plurality of switching parts 611 to 616 control a current supplied from the generator SG to the battery 14. The plurality of switching parts 611 to 616 selectively allow or block the passing of a current between the multi-phase stator windings W and the battery 14. By switching on/off the switching parts 611 to 616 one after another, a control of a voltage and a rectification of a three-phase AC outputted from the generator SG are performed.

Each of the switching parts 611 to 616 includes a switching element. The switching element is, for example, a transistor and in more detail, a FET (Field Effect Transistor). Instead of FETs, for example, thyristors or IGBTs (Insulated Gate Bipolar Transistors) are also adoptable for the switching parts 611 to 616.

The starter-generator controller 62 controls the operation of the generator SG by controlling the on/off-operation of each of the switching parts 611 to 616. The starter-generator controller 62 includes a phase control unit 621, a vector control unit 622, an on/off-operation storage unit 623, and an initial operation unit 624. The combustion controller 63 and the starter-generator controller 62 including the phase control unit 621 and the vector control unit 622 are implemented by a computer (not shown) and control software executable by the computer. Here, it may be also acceptable that the combustion controller 63 and the starter-generator controller 62 including the phase control unit 621 and the vector control unit 622 are partially or entirely implemented by a hardware circuit which is an electronic circuit. In addition, for example, the starter-generator controller 62 and the combustion controller 63 may be configured as separate devices arranged at a distance from each other, or alternatively they may be configured as an integrated device.

The on/off-operation storage unit 623 is formed of, for example, a memory. The on/off-operation storage unit 623 stores data relating to on/off-operation of the plurality of switching parts 611 to 616. More specifically, the on/off-operation storage unit 623 stores a map used when the control device CT controls the generator SG and the four-stroke engine body E, and software describing information.

The initial operation unit 624 is formed of an electronic circuit (wired logic). The initial operation unit 624 generates an electrical signal for performing on/off-operation of the plurality of switching parts 611 to 616. The control device CT may concurrently operate both the on/off-operation storage unit 623 and the initial operation unit 624, or may operate one of the on/off-operation storage unit 623 and the initial operation unit 624.

The combustion controller 63 directs the spark plug 29 to perform an ignition operation, thus controlling a combustion operation of the four-stroke engine body E. In a case where the four-stroke engine body E includes a fuel injector that injects a fuel for generation of a mixed gas, the combustion controller 63 also controls injection of the fuel injector, to control the combustion operation of the four-stroke engine body E.

A starter switch 16 for starting the four-stroke engine body E is connected to the starter-generator controller 62. A rider operates the starter switch 16, to start the four-stroke engine body E. The starter-generator controller 62 of the control device CT detects a state of charging of the battery 14 by detecting a voltage of the battery 14. For detection of the state of charging of the battery 14, however, an approach other than detection of the voltage of the battery 14 is adoptable. For example, detection of a current flowing through the battery 14 in a charged state is adoptable.

The control device CT controls the generator SG by operating the inverter 61, the starter-generator controller 62, and the combustion controller 63.

### [Operation of Engine Unit]

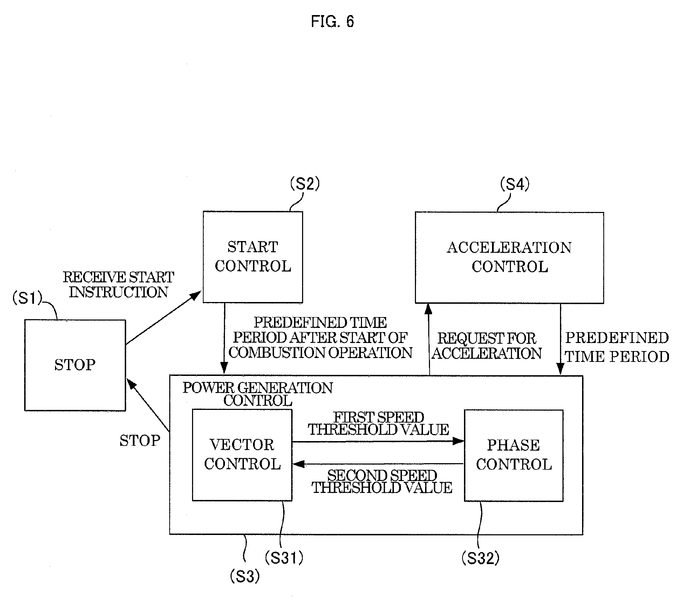

Fig. 6 is a state transition diagram showing, in outline, states of the engine unit EU of Fig. 5.

In the engine unit EU of this embodiment, when a start instruction is received under a state where rotation of the crankshaft 5 is stopped (S1), the control device CT transitions to a start control state (S2). In the start control state (S2), the control device CT directs the generator SG to rotate the crankshaft 5, to start the four-stroke engine body E (S2). Under the state where rotation of the crankshaft 5 is stopped, the control device CT controls the plurality of switching parts 611 to 616 of the inverter 61 such that power is supplied from the battery 14 to the generator SG. That is, the control device CT causes motoring of the generator SG in the start control state (S2). The control device CT performs such a control that a current is supplied from the positive electrode of the battery 14 to the generator SG. The control device CT directs the generator SG to function as a motor. Using the power of the battery 14, the generator SG drives the crankshaft 5. The control state of this embodiment corresponds to the control mode of the present invention.

The start instruction is inputted from the starter switch 16 to the control device CT when, for example, the starter switch 16 is operated. In a case where the engine unit EU has an idling stop function, the control device CT itself executes a restart instruction by determining a predefined engine start condition. Achievement of the predefined engine start condition is included in the input of the start instruction. The predefined engine start condition is, for example, activation of an acceleration operator (not shown). The predefined engine start condition is, for example, power stored in the battery 14 falling below a specific threshold value. The specific threshold value is, for example, a lower limit value of power necessary for starting the four-stroke engine body E. The specific threshold value may be a lower limit value of power necessary for operating devices mounted on the vehicle.

In the start control state (S2), the control device CT directs the generator SG to rotate the crankshaft 5. If the rotation speed of the crankshaft 5 is higher than a predetermined ignitable rotation speed, the control device CT starts the combustion operation of the four-stroke engine body E. In more detail, the combustion controller 63 of the control device CT controls the spark plug 29, thus controlling the combustion operation of the four-stroke engine body E. In a case where the four-stroke engine body E includes a fuel injector that injects a fuel for generation of a mixed gas, the combustion controller 63 also controls injection of the fuel injector to control the combustion operation of the four-stroke engine body E. Starting the combustion operation of the four-stroke engine body E includes evaluating whether or not the combustion operation is successful. Whether or not the combustion operation is successful is determined by, for example, measuring the rotation speed of the crankshaft 5 while the crankshaft 5 is rotated a plurality of times and evaluating whether or not the measured rotation speed is higher than a value defined as a value that would be obtained on the condition that the combustion operation is successful.

For a predefined time period after starting the four-stroke engine body E, the generator SG accelerates the rotation of the crankshaft 5 (S2). To be specific, after starting the combustion operation of the four-stroke engine body E including evaluation of whether or not the combustion operation is successful, the generator SG continuously accelerates the rotation of the crankshaft 5. In more detail, for a predefined time period after starting the combustion operation, the control device CT controls the plurality of switching parts 611 to 616 of the inverter 61 such that power is supplied from the battery 14 to the generator SG. That is, the control device CT causes motoring of the generator SG. This gives an increased acceleration to the rotation of the crankshaft 5, as compared with when no power is supplied from the battery 14 to the generator SG. Thus, an increased acceleration is given to the rotation of the crankshaft 5, as compared with rotation energized only by the combustion operation of the four-stroke engine body E. Using a vector control on the plurality of switching parts 611 to 616 of the inverter 61, the control device CT performs such a control that power is supplied from the battery 14 to the generator SG, to accelerate the rotation of the crankshaft 5. The vector control is based on 180-degree conduction.

The stability of rotation of the crankshaft 5 may sometimes be poor after the four-stroke engine body E starts the combustion operation. After the combustion of the four-stroke engine body is started, the generator SG continuously accelerates the rotation of the crankshaft 5, so that the rotation of the crankshaft 5 rotated by the combustion of the four-stroke engine body is stabilized. Here, the predefined time period is set to be a length of time (time duration) sufficient for stabilizing the rotation of the crankshaft 5. For example, the predefined time period is set to be a length of time sufficient for the rotation speed of the crankshaft 5 to reach an idle rotation speed.

After the predefined time period has elapsed since the combustion operation of the four-stroke engine body E was started, the generator SG is rotated along with the rotation of the crankshaft 5, to function as a generator that generates a current for charging the battery 14. The control device CT transitions to a power-generation control state (S3).

In the power-generation control state (S3), the control device CT directs the battery 14 to be charged with an output from the generator SG. The control device CT controls a current supplied from the generator SG to the battery 14 by controlling the plurality of switching parts 611 to 616 of the inverter 61. The control device CT performs such a control that a current flows from the generator SG to the positive electrode of the battery 14.

Upon receiving a stop instruction, the control device CT transitions from the power-generation control state (S3) to a stop state (S1). The stop state (S1) is a state where the four-stroke engine body E is stopped.

In the power-generation control state (S3), upon a request for acceleration of the rotation of the crankshaft 5, the control device CT transitions to an acceleration control state (S4). That is, for a predefined time period after starting the four-stroke engine body E, the control device CT accelerates the rotation of the crankshaft 5. More specifically, for the predefined time period, the control device CT accelerates the rotation of the crankshaft 5 by controlling the plurality of switching parts 611 to 616 of the inverter 61 such that power is supplied from the battery 14 to the generator SG. That is, the control device CT causes motoring of the generator SG.

If, for example, acceleration of the vehicle is requested while the generator SG is generating power, the control device CT switches the state of the generator SG from power generation to acceleration (motoring), to accelerate forward rotation of the crankshaft 5. For example, when acceleration of the vehicle is requested, acceleration of rotation of the crankshaft 5, which is energized by the combustion operation of the four-stroke engine body E, is assisted by the generator SG. This gives an increased acceleration to the rotation of the crankshaft 5, as compared with when no power is supplied from the battery 14 to the generator SG. Thus, an increased acceleration is given to the rotation of the crankshaft 5, as compared with rotation energized only by the combustion operation of the four-stroke engine body E. The control device CT performs the vector control on the plurality of switching parts 611 to 616 of the inverter 61, such that power is supplied from the battery 14 to the generator SG, to accelerate the rotation of the crankshaft 5. To be exact, the vector control unit 622 of the control device CT performs the vector control on the plurality of switching parts 611 to 616.

In the acceleration control state (S4), upon an elapse of the predefined time period, the control device CT transitions to the power-generation control state (S3).

In this embodiment, the power-generation control state (S3) of the control device CT includes a vector control state (S31) and a phase control state (S32). In the power generation control, the control device CT switches between the vector control and the phase control. Thus, the control device CT includes a switching unit that switches the control between the vector control and the phase control.

During at least part of a time period in which the voltage outputted from the generator SG is lower than the voltage of the battery 14, the control device CT performs the vector control (S31). More specifically, the vector control is performed by the vector control unit 622 of the control device CT. During at least part of a time period in which the voltage outputted from the generator SG is higher than the voltage of the battery 14, the control device CT performs the phase control (S32). More specifically, the phase control is performed by the phase control unit 621 of the control device CT. The voltage outputted from the generator SG is an output voltage from the stator windings W. The voltage outputted from the generator SG is the amplitude of an AC voltage outputted. The voltage of the battery 14 is a voltage obtained at a time when the control is switched.

In more detail, the control device CT performs the switching in the power generation control state in accordance with the rotation speed of the crankshaft 5. If the rotation speed of the crankshaft 5 exceeds a first speed threshold value which is predefined, the control device CT switches into the phase control state to perform the phase control (S32). If the rotation speed of the crankshaft 5 falls below a second speed threshold value which is predefined, the control device CT switches into the vector control state to perform the vector control (S31). The first speed threshold value is greater than the second speed threshold value. Since the first speed threshold value is set greater than the second speed threshold value, the transition of the control state in response to a speed change has hysteresis, which contributes to stabilization of the state. It is, however, acceptable that the first speed threshold value and the second speed threshold value are set to be the same value.

During a time period in which the vehicle is stopped and the voltage outputted from the generator SG is lower than the voltage of the battery 14, the rotation speed of the crankshaft 5 is lower than the second speed threshold value.

In a case where the vehicle is stopped under the power-generation control state (S3), the voltage outputted from the generator SG is lower than the voltage of the battery 14. In this case, the control device CT transitions to the vector control state (S31) in the power-generation control state (S3). More specifically, if the rotation speed of the crankshaft 5 is lower than the second speed threshold value, the control device CT transitions to the vector control state (S31) in the power-generation control state (S3).

During at least part of the time period in which the vehicle is stopped and the voltage outputted from the generator SG is lower than the voltage of the battery 14, the control device CT raises a voltage outputted from the generator SG, which is lower than the voltage of the battery 14, to a voltage higher than the voltage of the battery 14, to charge the battery 14 (S31). By performing the vector control on the plurality of switching parts 611 to 616 of the inverter 61, the control device CT raises the voltage outputted from the generator SG to a voltage higher than the voltage of the battery 14, to charge the battery 14.

The vector control is a control method in which a current of the generator SG is divided into a d-axis component and a q-axis component, the d-axis component corresponding to a magnetic flux direction of the magnet, the q-axis component being perpendicular in electrical angle to the magnetic flux direction. The q-axis component is a component that affects a torque load of the generator SG. The vector control is a control in which each phase of the multi-phase stator windings W is rendered conductive without any pause of the conduction. The vector control is a control in which conduction is effected such that a sine-wave current flows through each phase of the multi-phase stator windings W. Performing an on/off-operation of the plurality of switching parts 611 to 616 at timings based on the vector control causes a sine-wave current to flow through each of the multi-phase stator windings W. To achieve power generation based on the vector control, for example, a current is drawn in synchronization with a sine wave of an induced electromotive voltage of the stator windings W, the drawing being made in a direction of this induced electromotive voltage. Here, a sine-wave current and a sine-wave voltage mean a current and a current having sinusoidal shapes. The sine-wave current contains, for example, a distortion and a ripple caused by the on/off-operation of the switching parts.

In the vector control, each of the plurality of switching parts 611 to 616 is controlled by a pulse-width-modulated (PWM) signal. A pulse cycle in the pulse width modulation is shorter than a cycle of the induced electromotive voltage of each phase of the stator windings W. That is, the control device CT controls the on/off of the plurality of switching parts 611 to 616 in accordance with a pulse signal whose cycle is shorter than the cycle of the induced electromotive voltage of the stator windings W of the generator SG.

In the vector control, the vector control unit 622 of the control device CT obtains a d-axis component and a q-axis component from a current in the multi-phase stator windings W, which is detected by a sensor (not shown), and the position of the outer rotor 30, which is detected by the rotor position detection device 50. The control device CT controls the on/off timings of the plurality of switching parts 611 to 616, based on the components being corrected in accordance with target values.

In some methods adoptable for the control, a current in the stator windings of only part of the phases may be detected, or the position detection performed by the rotor position detection device 50 may be omitted. In another method adoptable for the control, the plurality of switching parts 611 to 616 may be controlled without detection of a current in stator winding of any phase. In such a case, the control device CT estimates a current that is synchronized with the sine wave of the induced electromotive voltage of the stator windings W based on the position of the outer rotor 30 detected by the rotor position detection device 50, and applies, to the stator windings W, a voltage for causing the estimated current to flow. For example, the control device CT uses a map (setting table) indicative of correspondence between the position of the outer rotor 30 and the pulse cycle, to control the plurality of switching parts 611 to 616 based on the position of the outer rotor 30. The map is preliminarily set by estimating, relative to the position of the outer rotor 30, a voltage for causing a current that is synchronized with the sine wave of the induced electromotive voltage to flow.

In some methods adoptable for controlling the on/off timings, for example, a formula may be calculated by using information received, or a map (setting table) stored in the on/off-operation storage unit 623 may be read out and referred to. The formula or map may be included in a program. It may be also acceptable that the control device CT performs the control by using the initial operation unit 624 configured as an electronic circuit (wired logic).

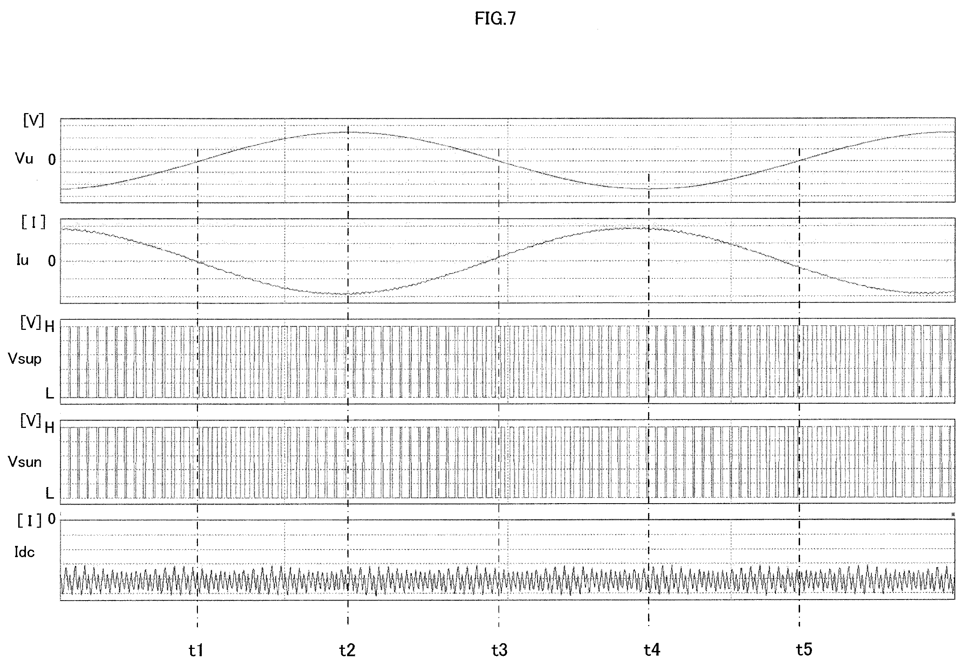

Fig. 7 shows exemplary current and voltage waveforms in the vector control.

In Fig. 7, Vu represents an induced electromotive voltage of the stator winding W corresponding to the U-phase among the multi-phase stator windings W of the generator SG. Iu represents a current in the stator winding W corresponding to the U-phase. In Fig. 7, a positive value of Iu represents a current flowing from the switching parts 611, 612 to the stator winding W. A negative value of Iu represents a current flowing from the stator winding W to the switching parts 611, 612.

Vsup and Vsun represent control signals for, among the plurality of switching parts 611 to 616, the two switching parts 611, 612 that are connected to the stator winding W corresponding to the U-phase. Vsup represents a control signal for the positive-side switching part 611 arranged between the stator winding W corresponding to the U-phase and the positive electrode of the battery 14. Vsup represents a control signal for the negative-side switching part 612 arranged between the stator winding W corresponding to the U-phase and the negative electrode of the battery 14. The H level of Vsup and Vsun represents an on-state of the switching parts 611, 612. The L level represents an off-state. Idc represents a current flowing through the battery 14. A negative value of Idc, that is, a value below "0" in Fig. 7, indicates that the generator SG generates power so that the battery 14 is charged.

As indicated by the control signals Vsup, Vsun for the switching parts 611, 612, the positive-side switching part 611 and the negative-side switching part 612 are in opposite states under the on-state and the off-state.

The control device CT controls the on/off duty cycle of the switching parts 611, 612 such that a sine-wave current flows through each phase of the stator windings W. The control device CT controls the switching parts 611, 612 such that the cycle of variation of the on/off duty cycle of the switching parts 611, 612 corresponds to the cycle of the induced electromotive voltage of the stator winding W. The induced electromotive voltage of the stator winding W has a sine wave which repeats a median "0" (timing t1, t5), a positive maximum (timing t2), a median "0" (timing t3), and a negative maximum (timing t4).

In the vector control, the control device CT controls the switching parts 611, 612 as follows. A difference between the duty cycle of the positive-side switching part 611 and the duty cycle of the negative-side switching part 612 at a timing (t2, t4) when the induced electromotive voltage Vu of the stator winding W has the positive maximum or the negative maximum is greater than a difference between the duty cycle of the positive-side switching part 611 and the duty cycle of the negative-side switching part 612 at a timing (t1, t3, t5) when the induced electromotive voltage Vu has the median ("0").

For example, at the timing (t1, t3, t5) when the induced electromotive voltage Vu of the stator winding W corresponding to the U-phase has the median ("0"), both of the duty cycles of the positive-side switching part 611 and the negative-side switching part 612 are closer to 50% than, for example, the duty cycles obtained at the timing (t2, t4) are. Therefore, the difference between the duty cycle of the positive-side switching part 611 and the duty cycle of the negative-side switching part 612 is small. As a result, the current in the stator winding W corresponding to the U-phase is reduced.

The duty cycles of the switching parts 611, 612 directly affect a voltage supplied from the battery 14 to the stator winding W. Due to an inductance component of the stator winding W, a delay occurs between the voltage and current. This is why there is a slight gap between a variation of the duty cycle and a variation of the current. The vector control, however, can improve a power factor for the current Iu flowing through the stator winding W and the induced electromotive voltage Vu.

The description about the U-phase given above is applied to the V-phase and W-phase, too. Each of the V-phase and W-phase has a time difference corresponding to 120 degrees in electrical angle relative to the U-phase.

In the vector control, the switching parts 611 to 616 are switched on and off by a PWM pulse having a higher frequency than the frequency of the induced electromotive voltage, which exerts a strong chopping effect on the current flowing through the stator winding W. As a result, the voltage outputted from the generator SG is raised to a voltage higher than the voltage of the battery 14, so that the battery 14 is charged. The vector control enables the current flowing through the stator winding W to be controlled relative to the induced electromotive voltage Vu so as to obtain an enhanced power factor, as shown in Fig. 7 for example. Accordingly, even if the voltage outputted from the generator SG is lower than the voltage of the battery, an amount of power generation can be ensured with a high efficiency.

Since the number of the magnetic pole faces 37a included in the outer rotor 30 of the generator SG is more than 2/3 of the number of teeth 43, the angular velocity in electrical angle is high. Accordingly, an amount of power generation can be ensured with a higher efficiency.

The four-stroke engine body E of this embodiment is a four-stroke engine having a high-load region and a low-load region. The rotation speed of the crankshaft 5 is higher in the low-load region than in the high-load region. In the four-stroke engine body E, the rotation speed largely varies depending on regions. If the rotation speed largely varies depending on regions, the stability of the rotation tends to deteriorate when the rotation speed of the crankshaft 5 is lowered.

The engine unit EU of this embodiment is able to charge the battery 14 even if, when the vehicle is stopped, the rotation speed of the crankshaft 5 is low so that a voltage lower than the voltage of the battery 14 is outputted from the generator SG. Power that the generator SG generates in charging the battery 14 corresponds to a load put on the engine body. This load is high in a region where the rotation speed is relatively high, and low in a region where the rotation speed is relatively low. That is, the load varies in such a manner as to stabilize the rotation speed. Accordingly, even if, when the vehicle is stopped, the rotation speed of the crankshaft 5 is low so that a voltage lower than the voltage of the battery 14 is outputted from the generator SG, an amount of power generation can be ensured with a high efficiency while the rotation speed of the crankshaft 5 is stabilized.

In the phase control state (S32) shown in Fig. 6, the control device CT performs the phase control.

The phase control is a control in which the plurality of switching parts 611 to 616 of the inverter 61 are rendered conductive at advanced or delayed timings. The phase control is a control different from the vector control described above. In the phase control, the control device CT performs an on/off-operation of each of the plurality of switching parts 611 to 616 with a cycle equal to the cycle of the induced electromotive voltage of the stator winding W. In the phase control, the control device CT switches on/off each of the plurality of switching parts 611 to 616 just one time with a cycle equal to the cycle of the induced electromotive voltage of the stator winding W. The control device CT controls the phase of the on/off-operation of each of the plurality of switching parts 611 to 616 relative to the induced electromotive voltage of the stator winding W.

Fig. 8 shows exemplary current and voltage waveforms in the phase control.

In Fig. 8, Vu, Iu, Vsup, Vsun, and Idc are the same as those of Fig. 7. In Fig. 8, however, the vertical axis for Vu, Iu, and Idc has a scale different from that of Fig. 7. In the example shown in Fig. 8, in addition, the rotation speed of the crankshaft 5 is higher as compared with the example shown in Fig. 7. Therefore, the cycle of the induced electromotive voltage Vu is shorter as compared with the example shown in Fig. 7.

In the phase control, the control device CT controls the on/off of the plurality of switching parts 611 to 616 in accordance with the signals Vsup and Vsun whose cycles are equal to the cycle of the induced electromotive voltage of the stator winding W of the generator SG. The on/off duty cycle of the plurality of switching parts 611 to 616 is fixed. The on/off duty cycles of, among the plurality of switching parts 611 to 616, the positive-side switching part 611 and the negative-side switching part 612 are equal. Each of the plurality of switching parts 611 to 616 has an on/off duty cycle of 50%.

In the phase control, the control device CT advances or delays the timing to cause conduction of the plurality of switching parts 611 to 616, to control the current flowing from the stator winding W to the battery 14. The control device CT advances the on/off phase of the switching parts 611 to 616 relative to the induced electromotive voltage Vu, to reduce the current flowing through the battery 14. The control device CT delays the on/off phase of the switching parts 611 to 616 relative to the induced electromotive voltage Vu, to increase the current flowing through the battery 14. In the phase control, switching on/off the switching parts 611 to 616 causes a path of the current outputted from the stator winding W of one phase to be changed between the stator winding W of another phase and the battery 14.

If the crankshaft 5 rotates at a rotation speed higher than its rotation speed obtained when the vehicle is stopped, an increased voltage is outputted from the generator SG. The voltage outputted from the generator becomes higher than the voltage of the battery 14. The phase control is performed during a time period in which the generator outputs a voltage higher than the voltage of the battery. The on/off cycle of the switching parts 611 to 616 in the phase control is longer than that in the vector control. That is, the on/off frequency of the switching parts 611 to 616 in the phase control is lower than that in the vector control. Therefore, a reduced switching loss is caused in switching the switching parts 611 to 616, which contributes to a high efficiency.

Accordingly, the engine unit EU of this embodiment is able to ensure an amount of power generation with a high efficiency, even if the crankshaft 5 rotates at a rotation speed higher than its rotation speed obtained when the vehicle is stopped so that the generator SG outputs a voltage higher than the voltage of the battery 14.

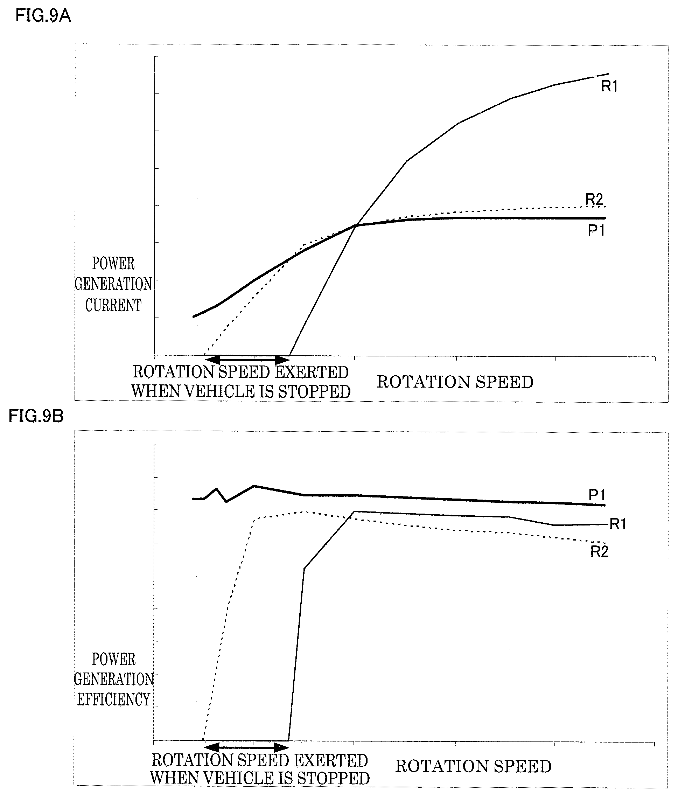

Fig. 9(a) is a graph schematically showing the relationship between the rotation speed of the crankshaft and a power generation current. Fig. 9(b) is a graph schematically showing the relationship between the rotation speed of the crankshaft and a power generation efficiency. In Figs. 9(a) and 9(b), the thick line (P1) indicates characteristics of the engine unit according to this embodiment.

The thin line (R1) indicates characteristics of a first comparative example in which a generator having the same configuration as that of the generator SG of this embodiment is connected to a rectifier regulator including a diode in its configuration.

The broken line (R2) indicates characteristics of a second comparative example in which a generator having an increased size as compared with the generator SG of this embodiment is connected to a rectifier regulator including a diode in its configuration. In the generator according to the second comparative example, a permanent magnet has an increased size, and a stator winding adopts a thicker wire with an increased number of turns. Therefore, the generator of the second comparative example has a size larger than the size of the generator SG of this embodiment.

The control device CT of this embodiment adopts the vector control method if the crankshaft 5 rotates at the rotation speed equal to the rotation speed obtained when the vehicle is stopped, and adopts the phase control method if the crankshaft 5 rotates at a rotation speed higher than its rotation speed obtained when the vehicle is stopped. Figs. 9(a) and 9(b) show a range of the rotation speed of the crankshaft 5 corresponding to when the vehicle is stopped. For example, an idle rotation speed of the crankshaft 5 is set within this range.

The generator SG of this embodiment outputs a voltage lower than the voltage of the battery 14, if the crankshaft 5 rotates at the rotation speed equal to the rotation speed obtained when the vehicle is stopped.

In the first comparative example, a generator having the same configuration as that of the generator SG of this embodiment is connected to a rectifier regulator including a diode in its configuration. In the first comparative example, as indicated by the thin line R1 in Fig. 9(a), the rotation speed when the vehicle is stopped does not enable a current to flow from the generator to the battery. That is, the battery is not charged.

In this embodiment, on the other hand, the control device CT performs the vector control on the plurality of switching parts 611 to 616, so that the voltage outputted from the generator SG is raised to a voltage higher than the voltage of the battery 14. Therefore, as indicated by the thick line in Fig. 9(a), the rotation speed when the vehicle is stopped enables a current to flow from the generator SG to the battery 14. That is, when the vehicle is stopped, the battery 14 is charged even though the generator SG outputs a voltage lower than the voltage of the battery 14.

In the second comparative example, the generator outputs a voltage lower than the voltage of the battery if the crankshaft 5 rotates at the rotation speed equal to the rotation speed obtained when the vehicle is stopped. Thus, as indicated by the broken line R2 in Fig. 9(a), the rotation speed when the vehicle is stopped enables a current to flow from the generator to the battery. In the generator of the second comparative example, however, the permanent magnet has an increased size, and the stator winding adopts a thicker wire with an increased number of turns, as compared with the generator SG of this embodiment. Therefore, the generator of the second comparative example has a size larger than the size of the generator SG of this embodiment.

In this embodiment, on the other hand, the control device CT performs the vector control on the plurality of switching parts 611 to 616, so that the voltage outputted from the generator SG is raised to a voltage higher than the voltage of the battery 14. This enables the battery 14 to be charged when the vehicle is stopped, without any need to increase the size of the generator SG.

In this embodiment, the control device CT is able to control the current and voltage of the generator SG so as to obtain an enhanced power factor by performing the vector control on the plurality of switching parts 611 to 616. This is why, as indicated by the thick line P1 in Fig. 9(b), the battery 14 is charged with a high efficiency even though a voltage lower than the voltage of the battery 14 is outputted from the generator SG when the vehicle is stopped. In other words, this embodiment allows the rotation speed of the crankshaft 5 to be lowered such that a voltage lower than the voltage of the battery 14 is outputted from the generator SG, while charging the battery 14 when the vehicle is stopped without any need to increase the size of the generator SG. This achieves less noise and less fuel consumption when the vehicle is stopped.

As an approach for ensuring a power generation voltage from a generator at a low rotation speed while avoiding any size increase of the generator, for example, it is conceivable to adopt a thin wire rod for the stator winding W and increase the number of turns thereof. Adoption of a thin wire rod with an increased number of turns for the stator winding W, however, results in a decreased drive torque being obtained when the crankshaft 5 is rotated with the power supplied from the battery 14.

The engine unit EU of this embodiment is able to charge the battery 14 with a high efficiency even if the rotation speed of the crankshaft 5 is lowered such that the output voltage of the generator SG falls below the voltage of the battery 14. Accordingly, in a case of driving the crankshaft 5 with the power supplied from the battery 14, a decrease in the drive torque is prevented, while in a case of power generation, an amount of power generation can be ensured with a high efficiency even though the rotation speed of the crankshaft 5 when the vehicle is stopped is lowered.

Hence, the engine unit EU of this embodiment is able to ensure an amount of power generation with a high efficiency even if the rotation speed of the crankshaft 5 is lowered when the vehicle is stopped, without any need to increase the size of the generator SG.

If the crankshaft 5 rotates at a rotation speed higher than its rotation speed obtained when the vehicle is stopped, the voltage outputted from the generator SG increases. The voltage outputted from the generator SG becomes higher than the voltage of the battery.

In the first comparative example which adopts the generator having the same configuration as that of the generator SG of this embodiment, the current outputted from the generator increases as the rotation speed increases. Of the current outputted from the generator, an extra current not used for charging the battery is consumed as heat in the rectifier regulator.

In this embodiment, the control device CT performs the phase control for advancing or delaying the timing to cause conduction of the plurality of switching parts 611 to 616. As a result, a current outputted from the generator SG is reduced. Therefore, a portion of the current outputted from the generator SG that is consumed as heat is reduced. Accordingly, even in a situation where the crankshaft 5 rotates at a rotation speed higher than its rotation speed obtained when the vehicle is stopped so that the generator SG outputs a voltage higher than the voltage of the battery 14, an amount of power generation can be ensured with a high efficiency, as indicated by the thick line P1 in Fig. 9(b).

Moreover, this embodiment is able to ensure an amount of power generation with a high efficiency in both of the cases where the crankshaft 5 rotates at the idle rotation speed and where the crankshaft 5 rotates at a rotation speed higher than the idle rotation speed.

In the start control state (S2) shown in Fig. 6, the control device CT directs the generator SG to rotate the crankshaft 5 to start the four-stroke engine body E. For the predefined time period after starting the combustion operation of the four-stroke engine body E, the control device CT directs the generator SG to accelerate the rotation of the crankshaft 5. In the start control state (S2), the control device CT performs the vector control on the plurality of switching parts 611 to 616 of the inverter 61, such that power is supplied from the battery 14 to the generator, to accelerate the rotation of the crankshaft 5.

After the predefined time period has elapsed since the combustion operation of the four-stroke engine body E was started, the control device CT transitions to the power-generation control state (S3). At this time, if the vehicle is stopped and the output voltage of the generator SG is lower than the voltage of the battery 14, the control device CT transitions to the vector control state (S31) included in the power-generation control state (S3). To be more specific, the control device CT transitions from the start control state (S2), in which the rotation of the crankshaft 5 is accelerated based on the vector control, to the vector control state (S31) included in the power-generation control state (S3). In the vector control state (S31), the control device CT performs the vector control on the plurality of switching parts 611 to 616 of the inverter 61, so that the voltage outputted from the generator SG, which is lower than the voltage of the battery 14, is raised to a voltage higher than the voltage of the battery, for charging the battery 14.

The transition of the control state from the control state in which the rotation of the crankshaft 5 is accelerated based on the vector control to the control state in which the battery 14 is charged based on the vector control does not involve any change in the control type. The transition of the control state can be promptly implemented by, for example, changing a parameter such as a command value. The transition of the control state is implemented by, for example, varying the phase of the current in the multi-phase stator windings W relative to the phase of the induced electromotive voltage. For example, the transition of the control state can be implemented by changing, among control values used in the vector control, the value of the q-axis component current, which contributes to the torque, from the positive value to the negative value.

Accordingly, the transition from the state where the rotation of the crankshaft 5 is accelerated to the state where the battery 14 is charged, in other words, from the motoring state to the power generation state, can be implemented immediately.

In the vector control state (S31), the control device CT performs the vector control on the plurality of switching parts 611 to 616 of the inverter 61, so that the voltage outputted from the generator SG, which is lower than the voltage of the battery 14, is raised to a voltage higher than the voltage of the battery, for charging the battery 14.

In the vector control state (S31) in the power-generation control state (S3), upon a request for acceleration of the rotation of the crankshaft 5, the control device CT transitions to the acceleration control state (S4). In the acceleration control state (S4), the control device CT performs the vector control on the plurality of switching parts 611 to 616 of the inverter 61, such that power is supplied from the battery 14 to the generator, to accelerate the rotation of the crankshaft 5.

The transition of the control state from the control state in which the battery 14 is charged based on the vector control to the control state in which the rotation of the crankshaft 5 is accelerated based on the vector control does not involve any change in the control type. The transition of the control state can be promptly implemented by, for example, changing a parameter such as a command value.

Accordingly, the transition from the state where the battery 14 is charged to the state where the rotation of the crankshaft 5 is accelerated, in other words, from the power generation state to the motoring state, can be implemented immediately.

### [Motorcycle]

Fig. 10 is a diagram showing an external appearance of a vehicle to which the engine unit EU shown in Fig. 1 is mounted.

A vehicle A shown in Fig. 10 includes an engine unit EU, a vehicle body 101, wheels 102 and 103, and a battery 14. The engine unit EU mounted to the vehicle A drives the wheel 103, which is a drive wheel, via a clutch (not shown), so that the wheel 103 is rotated to cause the vehicle A to travel. When the vehicle A is stopped, the clutch interrupts transmission of the rotation force from the crankshaft 5 to the wheel 103.

The vehicle A shown in Fig. 10, which is equipped with the engine unit EU, is able to ensure an amount of power generation with a high efficiency even if the rotation speed of the crankshaft 5 is the rotation speed when the vehicle is stopped, without any need to increase the size of the generator SG.

The vehicle A shown in Fig. 10 is a motorcycle. The vehicle of the present invention is not limited to motorcycles. Examples of the vehicle of the present invention include scooter type motorcycles, moped type motorcycles, off-road type motorcycles, and on-road type motorcycles. Straddled vehicles other than motorcycles are also acceptable. For example, ATVs (All-Terrain Vehicles) are acceptable. The vehicle of the present invention is not limited to straddled vehicles, and may be a four-wheeled vehicle including a passenger compartment, for example.

The vehicle of the present invention is not limited to a vehicle configured to drive a drive wheel by using a mechanical output of an engine. For example, the vehicle of the present invention may be a vehicle configured to drive a generator by using a mechanical output of an engine while directing a motor different from the generator to drive a drive wheel with power supplied from the generator.

In this embodiment, the four-stroke engine body E having a high-load region and a low-load region has been described. This embodiment illustrates the case where the four-stroke engine body E is a single-cylinder engine. The engine body of the present invention, however, is not particularly limited. The engine body of the present invention may be an engine having no low-load region. For example, the engine of the present invention may be an engine including a plurality of cylinders. The engine of the present invention may be, for example, an engine including three or more cylinders.

An engine including a plurality of cylinders causes less load variation, and thus provides a high stability of rotation. This allows the rotation speed of the crankshaft when the vehicle is stopped to be further lowered. Even if the rotation speed of the crankshaft when the vehicle is stopped is further lowered, an amount of power generation can be ensured with a high power generation efficiency.

In the example illustrated in this embodiment, the vector control is performed during the time period in which the vehicle is stopped and the voltage outputted from the generator SG is lower than the voltage of the battery 14. The control device of the present invention, however, may perform the vector control during part of the time period in which the voltage outputted from the generator is lower than the voltage of the battery. It may also be acceptable that the control device of the present invention performs the vector control during a time period in which the voltage outputted from the generator is higher than the voltage of the battery. In addition, the control device of the present invention may perform the vector control even during a time period in which the vehicle is travelling.

In this embodiment, the time period in which the rotation speed of the crankshaft 5 is lower than the predefined second speed threshold value has been illustrated as an example of the time period in which the vehicle is stopped and the voltage outputted from the generator is lower than the voltage of the battery. In the present invention, however, whether the vehicle is stopped may be evaluated based on, for example, the state of rotation of the wheel. Also, whether the voltage outputted from the generator is lower than the voltage of the battery may be evaluated by direct or indirect measurement of the voltage outputted from the generator and the voltage of the battery.

In the example illustrated in this embodiment, the phase control is performed during the time period in which the voltage outputted from the generator SG is higher than the voltage of the battery 14. The control device of the present invention, however, may not perform the phase control. For example, instead of performing the phase control, the control device may keep the transistor of the switching part in an off-state and perform rectification by means of a diode of the transistor.

In the example illustrated in this embodiment, after starting the four-stroke engine body E, the control device CT accelerates the rotation of the crankshaft 5 for the predefined time period in the start control state (S2) and the acceleration control state (S4). The control device of the present invention, however, may not accelerate the rotation of the crankshaft. Moreover, the acceleration of the rotation of the crankshaft may be performed in either one of the start control state and the acceleration control state.

In the description above, the control device performs the vector control in the start control state (S2) and the acceleration control state (S4). Here, it may also be acceptable that, for example, the vector control is not performed in starting the rotation of the crankshaft 5 and/or in accelerating the rotation. For example, causing motoring of the generator based on 120-degree conduction is possible.

It should be understood that the terms and expressions used herein are for descriptions and have no intention to be construed in a limited manner, do not eliminate any equivalents of features shown and mentioned herein, and allow various modifications falling within the claimed scope of the present invention.

The present invention may be embodied in many different forms. The present disclosure is to be considered as providing examples of the principles of the invention. A number of illustrative embodiments are described herein with the understanding that such examples are not intended to limit the invention to preferred embodiments described herein and/or illustrated herein.

While some illustrative embodiments of the invention have been described herein, the present invention is not limited to the various preferred embodiments described herein. The present invention includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. For example, in the present disclosure, the term "preferably" is non-exclusive and means "preferably, but not limited to".

### Reference Signs List

- A: vehicle
- CT: control device
- E: four-stroke engine body
- EU: engine unit
- SG: generator
- 5: crankshaft
- 62: starter-generator controller
- 63: combustion controller
- 61: inverter
- 611-616: switching part
- 621: phase control unit
- 622: vector control unit

## Claims

1. An engine unit mounted to a vehicle provided with a battery, the engine unit comprising:
an engine body including a crankshaft,
a generator that generates power by being rotated along with the rotation of the crankshaft;
an inverter including a plurality of switching parts by which a current supplied from the generator to the battery is controlled; and
a control device including a power generation controller and a combustion controller, the power generation controller controlling the plurality of switching parts included in the inverter to control a current supplied from the generator to the battery, the combustion controller controlling a combustion operation of the engine body,
the control device being configured to, during at least part of a time period in which the vehicle is stopped and a voltage outputted from the generator is lower than a voltage of the battery, perform a vector control on the plurality of switching parts included in the inverter so as to raise the voltage outputted from the generator that is lower than the voltage of the battery to a voltage higher than the voltage of the battery, to charge the battery.

2. The engine unit according to claim 1, wherein
during at least part of a time period in which the voltage outputted from the generator is higher than the voltage of the battery, the control device charges the battery by performing a phase control for advancing or delaying the timing to cause conduction of the plurality of switching parts included in the inverter.

3. The engine unit according to claim 1 or 2, wherein
the generator functions as a motor that drives the crankshaft with power supplied from the battery,
under a state where rotation of the crankshaft is stopped, the control device starts the engine body by controlling the plurality of switching parts included in the inverter so as to supply power from the battery to the generator.

4. The engine unit according to claim 3, wherein
for a predefined time period after starting the engine body, the control device accelerates rotation of the crankshaft by controlling the plurality of switching parts included in the inverter so as to supply power from the battery to the generator.

5. The engine unit according to claim 4, wherein
a control mode of the control device transitions between a control mode of charging the battery by performing the vector control on the plurality of switching parts included in the inverter so as to raise the voltage outputted from the generator that is lower than the voltage of the battery to a voltage higher than the voltage of the battery, and a control mode of accelerating the rotation of the crankshaft by performing the vector control on the plurality of switching parts included in the inverter so as to provide for a control which causes power to be supplied from the battery to the generator.

6. The engine unit according to any one of claims 1 to 5, wherein
the engine body is a four-stroke engine in which a high-load region and a low-load region occur during four strokes, the high-load region having a high load on rotation of the crankshaft, the low-load region having a load on rotation of the crankshaft lower than that of the high-load region.

7. The engine unit according to any one of claims 1 to 6, wherein
the engine body includes a plurality of cylinders.

8. A vehicle comprising the engine unit according to any one of claims 1 to 7.
